# FASCICULE DE BREVET EUROPEEN

(11) **EP 1 792 829 B1**
(45) Date de publication et mention de la délivrance du brevet: **07.07.2010**
(21) Numéro de dépôt: 06291851.1
(22) Date de dépôt: 01.12.2006
(51) Int. Cl.: B64F 1/32, B61D 45/00

(54) **Procédé, système et dispositifs pour le transport de conteneurs**
Verfahren, System und Vorrichtungen zum Transportieren von Container
Method, system and devices for transporting containers

(30) Priorité: 02.12.2005 FR 0512227
(43) Date de publication de la demande: 06.06.2007
(73) Titulaire: Worldwide Flight Services Holding France S.A., 95703 Roissy Charles de Gaulle Cedex (FR)
(72) Inventeur: Fassin, Gilles, 91760 Itteville (FR)
(74) Mandataire: Mazabraud, Xavier

(56) Documents cités:
- DE-A1- 3 616 484
- DE-U1- 9 410 660
- US-A- 3 263 832
- US-A- 5 421 687
- US-A- 5 562 374
- US-B1- 6 652 214

## Description

La présente invention se rapporte notamment à un système de transport ferroviaire pour un ou plusieurs conteneurs. En particulier, il se rapporte à un wagon adapté à ce transport et à un dispositif de transbordement.

Le document DE-A-36 16 484 décrit un wagon ferroviaire conforme au préambule de la revendication 1.

Un grand nombre de marchandises est acheminé par voie aérienne, dans des conteneurs. Le transport aérien est rapide. Il est notamment particulièrement adapté au transport de denrées périssables. Cependant il n'existe pas actuellement de transports terrestres qui puissent actuellement prendre un relais efficace du transport aérien. Or, les aéroports sont des endroits souvent éloignés des lieux qu'ils desservent. Aussi, les aéroports sont souvent peu nombreux relativement à la surface du territoire qu'ils desservent. En outre, il peut être avantageux pour un transporteur aérien de privilégier un aéroport dans une zone géographique particulièrement étendue, par exemple une région, un pays ou un continent, notamment pour des raisons de regroupement d'activités, de prix et de saturation d'autres aéroports.

Les camions sont pour l'instant les relais les plus utilisés, car ils présentent une grande souplesse d'utilisation. Cependant, ils sont très lents relativement au transport aérien, et présentent des aléas importants.

Le transport de marchandise par voie ferrée est lui aussi très lent et présente des contraintes liées à un transport commun de plusieurs chargements n'ayant pas forcément la même destination finale, nécessitant d'abord qu'un train soit entièrement formé pour le faire partir, puis de séparer et de reformer un nouveau train lors d'une étape intermédiaire. En outre les trains de marchandises étant très lents, il ne peuvent s'intégrer dans le trafic passager, les obligeant à attendre la nuit pour voyager et/ou à laisser la priorité au trafic passager.

Des trains à grande vitesse, du type TGV, sont actuellement utilisés en France pour le transport de fret, mais seulement pour le fret postal. Les wagons passagers utilisés sont à peine réaménagés, l'aménagement intérieur étant retiré et des sangles étant utilisées pour l'arrimage de sacs de courrier. De tels wagons ne sont donc pas adaptés au transport de conteneurs.

En outre, l'utilisation de trains et/ou de camions impose une rupture de charge entre chaque moyen de transport, pour le chargement/déchargement et le stockage intermédiaire du conteneur, et/ou son transport entre les deux moyens de transport, aérien et terrestre

Ceci est aussi particulièrement désavantageux, en particulier lorsqu'un vol est détourné de sa destination initiale, afin de pouvoir rejoindre le lieu initialement prévu.

En outre, on connaît le document US 3 263 832 qui décrit un système de chargement dans un avion cargo. Un tel système présente des plateaux porteurs équipés de moyens de roulement pour le déplacement du conteneur sur les plateaux, de l'extérieur jusqu'à l'intérieur de l'avion, notamment par l'intermédiaire de plateaux porteurs intégrés au plancher de l'avion. Les moyens présentés sont inadaptés à permettre le chargement de conteneur jusqu'à l'intérieur d'un wagon ferroviaire.

Les documents US 5 421 687 et US 6 652 214 décrivent des systèmes de transport ferroviaire pour des conteneurs, ces derniers étant disposés pardessus une plate-forme de chargement de chaque wagon. Les wagons sont dépourvus d'enceinte formant carénage, ce qui limite leur vitesse de déplacement. Dans le document US 6 652 214, des bras de transfert sont en outre prévus pour le déplacement des conteneurs

Le but de l'invention est de proposer un système de transport terrestre présentant une efficacité améliorée, rapide, limitant les ruptures de charge et n'ayant pas, au moins, certains des inconvénients de l'art antérieur.

Selon l'invention, un tel système de transport d'au moins un conteneur par voie ferrée, comprend au moins un plateau porteur, ets caractérisé en ce que ledit plateau porteur comprend des moyens de roulement pour le déplacement du conteneur sur le plateau. Les moyens de roulement peuvent comprendre des moyens de roulement unidirectionnels, par exemple à rouleaux, et/ou des moyens de roulement multidirectionnels, par exemple à billes. Ces moyens de roulement peuvent être libres en mouvement. Leur mouvement peut être motorisé, et automatisé, par exemple en utilisant de l'air comprimé disponible et produit, notamment dans un train, pour le dispositif de freinage.

Un tel plateau peut faire partie d'un ou plusieurs dispositifs dans le système. Ainsi, un tel dispositif peut notamment être un wagon ou un quai.

Dans le cas d'un wagon, le plateau peut avantageusement comprendre les moyens de roulement multidirectionnels disposés dans une zone de chargement, pour le chargement latéral du conteneur dans le wagon puis son déplacement longitudinal le long du wagon. Tout aussi avantageusement, les moyens de roulement unidirectionnels peuvent être disposés pour un déplacement uniquement longitudinal du conteneur dans le wagon, notamment en dehors de la zone de chargement.

Des moyens d'immobilisation par butées escamotables peuvent permettre le déplacement du conteneur, sans le gêner, puis son immobilisation lorsqu'il a atteint une position de transport. Notamment pour un transport à grande vitesse, le wagon comprend avantageusement une enceinte fermée et sensiblement rigide formant carénage. Cette enceinte peut comprendre au moins une porte latérale, par exemple coulissante ou basculante vers le haut. Pour permettre le transport de conteneurs volumineux, l'enceinte est avantageusement d'un type surhaussé, par exemple du type de celle des voitures utilisées en France pour les trains passagers à grande vitesse à deux niveaux, dits TGV2N, dont le plancher intermédiaire est absent.

Le wagon est très avantageusement adapté au transport de conteneurs dont les dimensions sont, au moins, 3,18 m dans le sens longitudinal, 2,44 dans le sens transversal, et 3m en hauteur. Ceci permet le transport de conteneurs de type marine.

Dans le cas d'un plateau de transbordement équipant un quai, celui-ci est avantageusement configuré pour permettre le transbordement d'un conteneur entre deux wagons disposés respectivement de part et d'autre du quai. Une telle disposition évite des ruptures de charges importantes lorsqu'un conteneur doit changer de train. En particulier, comme pour des passagers, il n'est plus utile de former un nouveau train pour des conteneurs prenant une direction donnée. Chaque train, notamment s'il est du type TGV, peut donc garder sa configuration et les conteneurs être rapidement chargés de l'un vers l'autre wagon, par roulement sur un plateau, de transbordement entre deux trains, ou, dans un wagon.

Le plateau de transbordement peut être une partie fixe du quai, ou une partie mobile du quai conçue pour pouvoir se déplacer longitudinalement, notamment d'un accès transversal à un autre pour le conteneur, notamment un accès à une zone de stockage ou à un wagon.

Selon un autre objet, un wagon de transport d'au moins un conteneur comprend, selon l'invention, au moins un plateau porteur, caractérisé en ce que ledit plateau porteur comprend des moyens de roulement pour le déplacement du conteneur sur le plateau. En particulier, le wagon pouvant avoir l'une ou l'autres des caractéristiques précédemment décrites pour un tel wagon dans un système selon l'invention.

Selon encore un autre objet, un plateau de transbordement pour au moins un conteneur transporté par voie ferrée comprend, selon l'invention, au moins un plateau porteur, caractérisé en ce que ledit plateau porteur comprend des moyens de roulement pour le déplacement du conteneur sur le plateau. En particulier le plateau de transbordement peut avoir l'une ou l'autres des caractéristiques précédemment décrites pour un tel plateau dans un système selon l'invention.

Selon encore un autre objet, un procédé de transport ferroviaire selon l'invention, met en oeuvre un système tel que précédemment décrit.

Un système, un dispositif ou un procédé selon l'invention, peut ainsi être aisément utilisé pour une utilisation combinée d'un transport de marchandises aérien et ferroviaire et/ou ferroviaire et terrestre. Avantageusement un quai pour le transport ferroviaire sera une partie d'une plateforme aéroportuaire. Des moyens prévus pour décharger les avions pouvant servir au chargement d'un wagon selon l'invention, et réciproquement, sans autre rupture de charge.

D'autres particularités et avantages de l'invention ressortiront encore de la description ci-après, relative à des exemples non limitatifs. Dans ces exemples, le terme horizontal sera notamment employé pour désigner une ligne ou un plan qui est horizontal, par exemple lorsqu'un wagon est sur une voie horizontale. On comprendra que le même plan ou la même ligne peu ne pas être horizontal lorsque le wagon est sur une voie en pente ou en dévers. Il en va de même par exemple pour un quai, qui peut être légèrement incliné, transversalement ou longitudinalement. Le terme longitudinal correspond au sens de déplacement d'un wagon sur la voie qui le porte.

Aux dessins annexés :
- la figure 1 est une vue en perspective d'un wagon selon l'invention;
- la figure 2 est une vue de dessus d'un système selon l'invention, comprenant des wagons et des quais selon l'invention;
- la figure 3 est une vue en coupe selon la ligne III-III, partiellement, du système de la figure 2; et,
- la figure 4 est une vue en coupe verticale, longitudinale et transversale selon la ligne IV-IV, partiellement, du système de la figure 2; et,

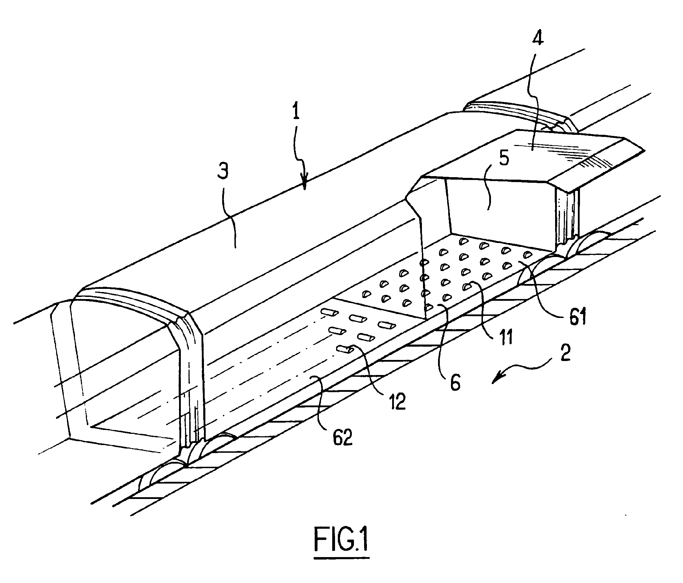

La figure 1 représente un wagon 1 le long d'un quai 2. Le wagon comprend, monté sur un châssis non représenté, une enceinte fermée 3. L'enceinte 3 comprend une porte 4 représentée ouverte à la figure 1. cette porte 4 est d'un type levant, c'est à qu'elle est articulée selon un axe horizontal, disposé au-dessus de l'ouverture 5 associée à la porte 4. Le wagon comprend en outre un plateau 6. Le plateau est porté par le châssis. Il est sensiblement horizontal et s'étend sensiblement sur toute une surface intérieure du wagon 1. A la figure 1, le plateau 6 est représenté par transparence à l'intérieur de l'enceinte 3.

Le plateau est prévu pour supporter des conteneurs 10, non représentés à la figure 1, lors de leur transport dans le wagon. Le plateau 6 comprend des moyens de roulement 11,12, avantageusement disposés pour permettre le déplacement des conteneurs à l'intérieur de l'enceinte sans moyens de levage et avec des efforts réduits. Dans une première zone 61 du plateau 6, dite de chargement, les moyens de roulement sont multidirectionnels, c'est-à-dire qu'ils permettent un déplacement des conteneurs dans plusieurs directions horizontales. La zone de chargement 61 est une zone du plateau 6 sur laquelle s'ouvre la porte 4. Elle s'étend sensiblement sur la longueur de la porte et sur la largeur du plateau. Dans une deuxième zone 62 du plateau 6, qui est la zone du plateau non occupée par la zone de chargement, les moyens de roulement 12 sont unidirectionnels, c'est-à-dire qu'ils permettent un déplacement des conteneurs dans une seule direction horizontale. Ainsi, les conteneurs peuvent être chargés selon une direction transversale dans la zone de chargement, par l'ouverture 5 de la porte 4, puis leur direction être modifiée, pour rouler longitudinalement d'abord dans la zone de chargement 61 puis progressivement depuis la zone de chargement, jusque dans la deuxième zone 62.

Arrivé, à un emplacement qu'il doit occuper pour le transport, le conteneur peut être arrimé par tout moyen. De préférence on utilise des butées escamotables (non représentées), permettant une fixation rigide, transversalement et longitudinalement, du conteneur dans le wagon 1. Les butées escamotables sont disposées de sorte que dans leur position escamotée, elles ne gênent pas le roulement du conteneur, et que dans leur position redressée, elles empêchent ce roulement, au moins selon une direction. L'utilisation de butées escamotables est particulièrement avantagée par l'emploi de conteneurs normalisés, ce qui permet de définir l'emplacement des butées en fonction des dimensions normalisées de ces conteneurs.

Dans les exemples illustrés, les moyens de roulement multidirectionnels sont des billes 11 et les moyens de roulement unidirectionnels sont des rouleaux 12.

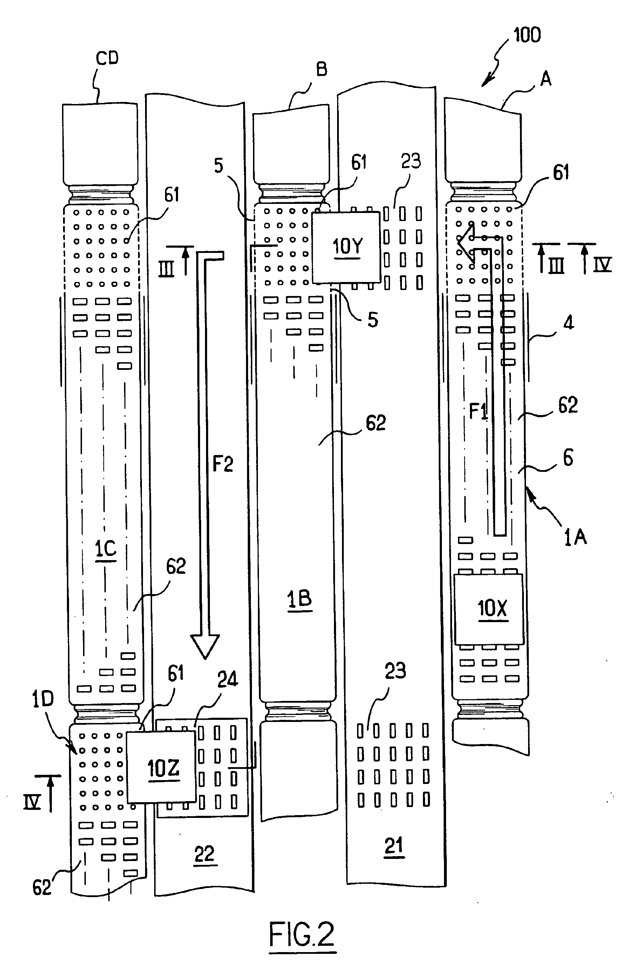

Les figures 2 à 4, illustrent le fonctionnement d'un système 100 selon l'invention. La figure 2 est une vue de dessus schématique et partielle, d'une gare mettant en oeuvre le système 100. Ce système comprend des trains A,B,C, chacun comprenant des wagons 1A-1D selon l'invention. A la figure 2, un premier train A comprend un premier wagon 1A, un deuxième train B comprend un deuxième wagon 1B, et un troisième train CD comprend un troisième wagon 1C et un quatrième wagon 1D. Les premier et deuxième trains A,B sont disposés contigus à et de part et d'autre d'un premier quai 21, et les deuxièmes et troisièmes trains sont disposés contigus à et de part et d'autre d'un deuxième quai 22. Les ouvertures 5 respectives, représentées en pointillés, des premier, deuxième et troisième wagons sont sensiblement en vis-à-vis les unes des autres.

Les wagons 1A-1D sont similaires à celui illustré à la figure 1, sauf en ce qu'ils ont chacun deux portes coulissantes montées en vis-à-vis, de part et d'autre de la zone de chargement 61.

Les quais 21,22 sont équipés de plateaux de transbordement 23,24 pour permettre le roulement d'un conteneur depuis le quai jusque dans la zone de chargement, pour le chargement du conteneur, ou depuis la zone de chargement jusque sur le quai, pour le déchargement du conteneur.

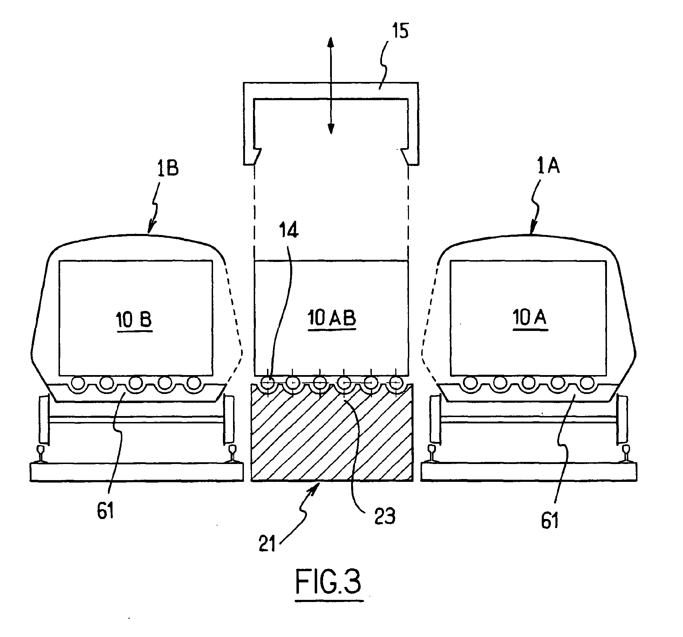

Un premier mode de réalisation pour un plateau de transbordement 23 est illustré à la figure 3. La figure 3 représente une coupe transversale du premier quai 21 et des wagons 1A,1B adjacents au quai 21. Ce plateau fait partie intégrante du premier quai 21; c'est-à-dire qu'il est fixe dans le quai. Il est défini par la partie supérieure du quai 21. Il a au moins sensiblement la longueur d'une ouverture 5 pour un wagon 1A-1D selon l'invention prévu pour être utilisé dans le système 100. Il a sensiblement la largeur du quai 21. Le plateau 21 comprend des moyens de roulement 14, ici des rouleaux 14, pour permettre le roulement d'un conteneur 10 sur le plateau de quai, transversalement au quai. Dans le système illustré aux figures 2 et 3, et dans le procédé associé, les trains sont prévus pour s'arrêter le long du premier quai 21 de sorte qu'une zone de chargement d'un wagon selon l'invention soit en vis-à-vis d'un premier plateau de transbordement 21. Le plateau 23 défini une surface pour le déplacement du conteneur qui prolonge une surface de déplacement définie par la zone de chargement 61 d'un wagon adjacent au quai 21.

Ainsi, le plateau permet de décharger le conteneur 10 depuis une position 10A de ce conteneur dans la zone de chargement 61 du premier wagon 1A, jusque dans une position intermédiaire 10AB sur le premier plateau de transbordement 23, par simple roulement. Il est ensuite possible de charger le conteneur 10 jusque dans une position 10B dans la zone de chargement 61 du deuxième wagon 1B, aussi par simple roulement.

Il est encore possible, lorsque le conteneur est dans sa position intermédiaire 10AB, de le saisir à l'aide d'un engin de levage 15 schématisé à la figure 3, par exemple pour son chargement dans un camion ou son stockage dans une zone prévue à cet effet.

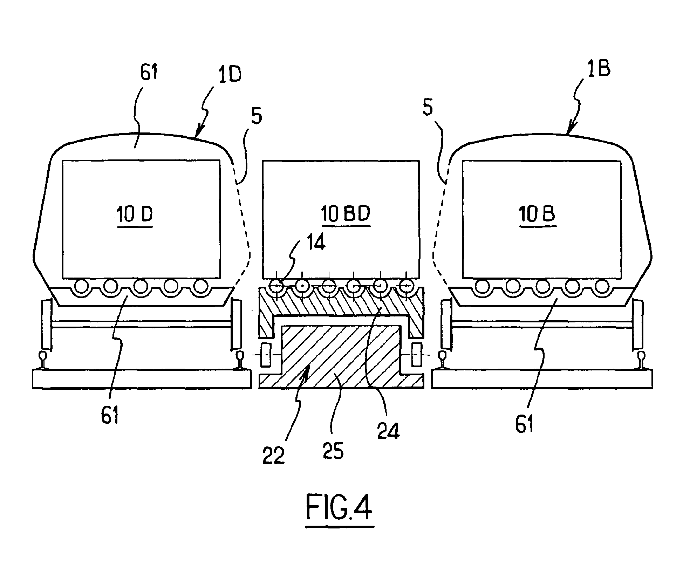

Un deuxième mode de réalisation d'un plateau de transbordement 24 est illustré à la figure 4. La figure 4 représente une coupe transversale du deuxième quai 22, et des wagons 1B,1D adjacents au quai 22. Ce plateau 24 est une partie supérieure du quai 22, mobile longitudinalement relativement à une partie inférieure fixe 25 du deuxième quai 22. Le plateau de quai 24 a au moins sensiblement la longueur d'une ouverture 5 pour un wagon 1A-1D selon l'invention prévu pour être utilisé dans le système 100. Il a sensiblement la largeur du quai 21. Le plateau 24 comprend des moyens de roulement 14, ici des rouleaux 14, pour permettre le roulement d'un conteneur 10 sur le plateau de transbordement 24, transversalement au quai 22. Le plateau 24 pouvant se déplacer longitudinalement, il n'est pas nécessaire que la position des trains B,CD soit imposée le long du deuxième quai 22. Aussi, il est possible de décharger puis de charger un conteneur respectivement depuis et vers deux wagons 1B,1D dont des ouvertures respectives 5 ne sont pas en vis-à-vis l'une de l'autre.

Ainsi, comme particulièrement illustré aux figures 2 et 4, le plateau mobile 24 permet de décharger le conteneur 10 depuis une position 10B de ce conteneur dans la zone de chargement 61 du deuxième wagon 1B, jusque dans une position intermédiaire 10BD sur le plateau mobile de quai 24, par simple roulement. On peut ensuite déplacer longitudinalement le plateau mobile 24 jusqu'à ce qu'il soit en vis-à-vis de la zone de déchargement 61 du quatrième wagon 1D. Enfin, il est ensuite possible de charger le conteneur 10 jusque dans une position 10D dans la zone de chargement 61 du quatrième wagon 1B, par simple roulement.

Dans le système 100, illustré à la figure 2, il est ainsi possible de transférer selon les flèches F1,F2 le conteneur 10 depuis une première position de transport 10X dans le premier wagon 1A vers une deuxième position de transport, non représentée, dans le quatrième wagon 1D, en passant par des positions intermédiaires illustrées 10Y,10Z. Pour cela, le conteneur 10 est d'abord roulé longitudinalement sur le plateau 6 du premier wagon 1A, d'abord dans la zone 62 puis dans la zone de chargement 61. Ensuite il est transféré par roulement vers le quatrième wagon, en utilisant successivement les procédés illustrés respectivement aux figures 3 et 4, et précédemment décrits.

On note que le fait que le deuxième wagon 1B comprend deux ouvertures 5 en vis-à-vis permet à celui-ci d'être traversé par le conteneur 10. Le deuxième wagon sert ainsi de plateau pour le franchissement de l'espace entre le premier quai 21 et le deuxième quai 22.

Bien sûr, l'invention n'est pas limitée aux exemples qui viennent d'être décrits et de nombreux aménagements peuvent être apportés à ces exemples sans sortir du cadre de l'invention.

Notamment, les moyens de roulement peuvent avantageusement être motorisés. Ainsi, le roulement, d'une charge, notamment d'un conteneur, peut se faire sans l'apport d'une force extérieure ou l'utilisation d'un engin ou d'une autre force motrice.

En outre, un système selon l'invention, notamment les moyens de roulement peuvent être automatisés. Ainsi, les conteneurs peuvent comprendre de moyens d'identification, notamment des moyens de d'identification de leurs destination, par exemple des puces ou des code-barres. Ainsi, un conteneur peut être déplacé automatiquement dans un tel système selon l'invention, à l'aide de moyens de roulement convenablement motorisés et automatisés, par exemple d'un wagon à un autre, lors d'un changement de destination. Le chargement du conteneur dans le système, puis son déchargement, peuvent eux aussi être automatisés.

Bien sur un système selon l'invention est particulièrement adapté au transport de conteneurs fermés du type utilisé pour le transport de marchandises par voie maritime ou aérienne. Dans le cadre de l'invention, il doit être compris que le terme conteneur peut aussi désigner d'autres type de contenants pour des marchandises. Ainsi, un tel système est notamment adapté au transport de marchandises palettisées sur des palettes adaptées aux moyens de roulement du système.

## Revendications

1. Wagon ferroviaire (1, 1A-1D) de transport d'au moins un conteneur (10), le wagon comprenant au moins un plateau porteur (6) monté sur un châssis, le wagon comprenant une enceinte fermée (3) sensiblement rigide formant carénage montée sur le châssis, dans laquelle est prévue une porte latérale (4), le wagon étant adapté à recevoir au travers d'une ouverture (5) apte à être fermée par la porte latérale (4), ledit au moins un conteneur dont les dimensions sont, au moins, 3m18 dans le sens longitudinal et 2m44 dans le sens transversal, **caractérisé en ce que** le wagon est du type pour train à grande vitesse tel qu'un TGV, ledit plateau porteur (6) s'étendant sensiblement sur toute la surface intérieure du wagon et étant équipé de moyens de roulement (11, 12) d'une part multidirectionnels (11) dans une première zone dite zone de chargement (61) qui s'étend sensiblement sur la longueur de la porte (4) et sur la largeur du plateau (6), et d'autre part unidirectionnels (12) dans une seconde zone qui est la zone du plateau (6) non occupée par la zone de chargement (61).

2. Wagon selon la revendication 1, **caractérisé en ce qu'**il comprend pour le conteneur des moyens d'immobilisation par butées escamotables.

3. Wagon selon la revendication 2, **caractérisé en ce que** l'enceinte est d'un type surhaussé, par exemple du type de celle utilisée pour le transport à grande vitesse de passagers sur deux niveaux, sans plancher intermédiaire.

4. Wagon selon l'une des revendications 1 à 3, **caractérisé en ce qu'**il comprend deux portes latérales (4) en vis-à-vis pour permettre un déchargement et/ou un chargement transversal du conteneur dans ledit wagon.

5. Wagon selon l'une des revendications 1 à 4, **caractérisé en ce que** les moyens de roulement comprennent des moyens de roulement libres.

6. Wagon selon l'une des revendications 1 à 5, **caractérisé en ce que** les moyens de roulement comprennent des moyens de roulement motorisés.

7. Wagon selon l'une des revendications 1 à 6, **caractérisé en ce que** les moyens de roulement comprennent des moyens de roulement unidirectionnels (12, 14), qui peuvent être à rouleaux.

8. Wagon selon l'une des revendications 1 à 7, **caractérisé en ce que** les moyens de roulement comprennent des moyens de roulement multidirectionnels (11), qui peuvent être à billes.

9. Wagon selon l'une des revendications 1 à 8, **caractérisé en ce que** le plateau (6) du wagon comporte des moyens de roulement multidirectionnels disposés dans une zone de chargement (61), pour un chargement latéral du conteneur dans le wagon.

10. Wagon selon l'une des revendications 1 à 7, **caractérisé en ce que** le plateau (6) du wagon comporte des moyens de roulement unidirectionnels disposés pour un déplacement longitudinal du conteneur dans le wagon, en particulier en-dehors d'une zone de chargement latéral.

11. Wagon selon l'une quelconque des revendications précédentes **caractérisé en ce qu'**il est adapté au transport par voie ferrée de conteneurs dont la dimension est au moins 3m en hauteur.

12. Système de transport (100) d'au moins un conteneur (10), par voie ferrée, comprenant au moins un quai (21, 22) et au moins un wagon (1, 1A-1D) adjacent au quai, **caractérisé en ce que** le wagon est du type selon l'une quelconque des revendications précédentes, le quai étant également équipé d'au moins un plateau de transbordement (23, 24) du conteneur entre le wagon et le quai, pourvu de moyens de roulement (14) pour le déplacement du conteneur sur le plateau (23).

13. Système selon la revendication 12, **caractérisé en ce que** le plateau de transbordement (23, 24) est configuré pour permettre le transbordement d'un conteneur entre deux wagons disposés respectivement de part et d'autre du quai.

14. Système selon la revendication 12 ou 13, **caractérisé en ce que** le plateau de transbordement (23) est une partie fixe du quai (21).

15. Système selon la revendication 12 ou 13, **caractérisé en ce que** le plateau de transbordement (24) est une partie mobile du quai (22), ledit plateau de transbordement étant conçu pour pouvoir se déplacer longitudinalement le long d'une partie fixe (25) du quai.

16. Procédé de transport d'au moins un conteneur par voie ferrée, **caractérisé en ce qu'**on utilise un système selon l'une des revendications 12 à 15.

## Claims

1. Rail wagon (1, 1A-1D) for transporting at least one container (10), the wagon comprising at least one load deck (6) mounted on a chassis, the wagon comprising a substantially rigid enclosed housing (3) forming a fairing mounted on the chassis, in which a side door (4) is provided, the wagon being capable of receiving through an opening (5) capable of being closed by the side door (4), said at least one container of which the dimensions are, at least, 3m18 longitudinally and 2m44 transversally, **characterized in that** the wagon is of the type for a high-speed train such as a TGV, said load deck (6) extending substantially over the entire inner surface of the wagon and being equipped with rolling means (11, 12) on the one hand multidirectional (11) in a first area called the loading area (61) which extends substantially over the length of the door (4) and over the width of the load deck (6), and on the other hand unidirectional (12) in a second area which is the area of the load deck (6) not occupied by the loading area (61).

2. Wagon according to claim 1, **characterized in that** it comprises means of immobilizing the container by retractable stops.

3. Wagon according to claim 2, **characterized in that** the housing is of a superelevated type, for example of the type used for high-speed passenger transport on two levels, without an intermediate deck.

4. Wagon according to one of claims 1 to 3, **characterized in that** it comprises two side doors (4) facing each other in order to allow transverse loading and/or unloading of the container in said wagon.

5. Wagon according to one of claims 1 to 4, **characterized in that** the rolling means comprise free rolling means.

6. Wagon according to one of claims 1 to 5, **characterized in that** the rolling means comprise motor-driven rolling means.

7. Wagon according to one of claims 1 to 6, **characterized in that** the rolling means comprise unidirectional rolling means (12, 14), which can be of the roller type.

8. Wagon according to one of claims 1 to 7, **characterized in that** the rolling means comprise multidirectional rolling means (11), which can be of the ball type.

9. Wagon according to one of claims 1 to 8, **characterized in that** the load deck (6) of the wagon comprises multidirectional rolling means arranged in a loading area (61), for side loading of the container into the wagon.

10. Wagon according to one of claims 1 to 7, **characterized in that** the load deck (6) of the wagon comprises unidirectional rolling means arranged for longitudinal movement of the container in the wagon, in particular away from a side loading area.

11. Wagon according to any one of the previous claims, **characterized in that** it is suitable for rail transport of containers that are at least 3m high.

12. Transport system (100) of at least one container (10) by rail, comprising at least one platform (21, 22) and at least one wagon (1, 1A-1D) adjacent to the platform, **characterized in that** the wagon is of the type according to any one of the previous claims, the platform also being equipped with at least one transfer deck (23, 24) for transferring the container between the wagon and the platform, equipped with rolling means (14) for moving the container on the deck (23).

13. System according to claim 12, **characterized in that** the transfer deck (23, 24) is configured in order to allow the transfer of a container between two wagons arranged respectively on each side of the platform.

14. System according to claim 12 or 13, **characterized in that** the transfer deck (23) is a fixed part of the platform (21).

15. System according to claim 12 or 13, **characterized in that** the transfer deck (24) is a movable part of the platform (22), said transfer deck being designed in order to be moveable longitudinally along a fixed part (25) of the platform.

16. Method for transporting at least one container by rail, **characterized in that** a system according to one of claims 12 to 15 is used.

## Patentansprüche

1. Eisenbahnwaggon (1, 1A-1D) für den Transport mindestens eines Containers (10), wobei der Waggon mindestens eine auf einem Gestell befestigte Tragplatte (6) umfasst, wobei der Waggon eine im Wesentlichen starre geschlossene Hülle (3) umfasst, die eine auf dem Gestell befestigte Verkleidung bildet, in der eine Seitentür (4) vorgesehen ist, wobei der Waggon dazu vorgesehen ist, durch eine Öffnung (5), die durch die Seitentür (4) verschlossen werden kann, den mindestens einen Container aufzunehmen, dessen Abmessungen mindestens 3,18 m in Längsrichtung und 2,44 m in Querrichtung betragen,
**dadurch gekennzeichnet, dass** der Waggon vom Typ für einen Hochgeschwindigkeitszug, wie einen TGV, bestimmt ist, wobei sich die Tragplatte (6) im Wesentlichen über die gesamte Innenfläche des Waggons erstreckt und mit Rollmitteln (11, 12) versehen ist, die einerseits in einer ersten Zone, Ladezone (61) genannt, die sich im Wesentlichen über die Länge der Tür (4) und über die Breite der Platte (6) erstreckt, multidirektional (11) und andererseits in einer zweiten Zone, die die Zone der Platte (6) ist, die nicht von der Ladezone (61) eingenommen ist, unidirektional (12) sind.

2. Waggon nach Anspruch 1, **dadurch gekennzeichnet, dass** er für den Container Mittel zur Feststellung durch einziehbare Anschläge umfasst.

3. Waggon nach Anspruch 2, **dadurch gekennzeichnet, dass** die Hülle vom Typ überhöht ist, wie beispielsweise jene, die für die Hochgeschwindigkeitsbeförderung von Passagieren auf zwei Ebenen verwendet wird, ohne Zwischenboden ist.

4. Waggon nach einem der Ansprüche 1 bis 3, **dadurch gekennzeichnet, dass** er zwei sich gegenüberliegend angeordnete Seitentüren (4) umfasst, um ein Abladen und/oder Aufladen des Containers in den Waggon in Querrichtung zu ermöglichen.

5. Waggon nach einem der Ansprüche 1 bis 4, **dadurch gekennzeichnet, dass** die Rollmittel freie Rollmittel umfassen.

6. Waggon nach einem der Ansprüche 1 bis 5, **dadurch gekennzeichnet, dass** die Rollmittel motorisierte Rollmittel umfassen.

7. Waggon nach einem der Ansprüche 1 bis 6, **dadurch gekennzeichnet, dass** die Rollmittel unidirektionale Rollmittel (12, 14) umfassen, die mit Walzen ausgeführt sein können.

8. Waggon nach einem der Ansprüche 1 bis 7, **dadurch gekennzeichnet, dass** die Rollmittel multidirektionale Rollmittel (11) umfassen, die mit Kugeln ausgeführt sein können.

9. Waggon nach einem der Ansprüche 1 bis 8, **dadurch gekennzeichnet, dass** die Platte (6) des Waggons multidirektionale Rollmittel umfasst, die in einer Ladezone (61) für ein seitliches Laden des Containers in den Waggon angeordnet sind.

10. Waggon nach einem der Ansprüche 1 bis 7, **dadurch gekennzeichnet, dass** die Platte (6) des Waggons unidirektionale Rollmittel umfasst, die im Hinblick auf eine Längsverschiebung des Containers im Waggon, insbesondere über eine seitliche Ladezone hinaus, angeordnet sind.

11. Waggon nach einem der vorhergehenden Ansprüche, **dadurch gekennzeichnet, dass** er für den Schienentransport von Containern geeignet ist, deren Abmessung mindestens 3 m in der Höhe beträgt.

12. Transportsystem (100) für mindestens einen Container (10) auf der Schiene, umfassend mindestens eine Rampe (21, 22) und mindestens einen Waggon (1, 1A-1D), der an die Rampe angrenzt, **dadurch gekennzeichnet, dass** der Waggon von dem Typ nach einem der vorhergehenden Ansprüche ist, wobei die Rampe auch mit mindestens einer Umschlagplatte (23, 24) für das Umschlagen des Containers zwischen dem Waggon und der Rampe versehen ist, die mit Rollmitteln (14) für die Verschiebung des Containers auf der Platte (23) versehen ist.

13. System nach Anspruch 12, **dadurch gekennzeichnet, dass** die Umschlagplatte (23, 24) derart ausgeführt ist, dass sie das Umschlagen eines Containers zwischen zwei auf der einen bzw. der anderen Seite der Rampe angeordneten Waggons ermöglicht.

14. System nach Anspruch 12 oder 13, **dadurch gekennzeichnet, dass** die Umschlagplatte (23) ein fester Teil der Rampe (21) ist.

15. System nach Anspruch 12 oder 13, **dadurch gekennzeichnet, dass** die Umschlagplatte (24) ein beweglicher Teil der Rampe (22) ist, wobei die Umschlagplatte derart ausgeführt ist, dass sie sich längs entlang eines festen Teils (25) der Rampe bewegen kann.

16. Verfahren für den Transport mindestens eines Containers auf der Schiene, **dadurch gekennzeichnet, dass** ein System nach einem der Ansprüche 12 bis 15 verwendet wird.
